# EUROPEAN PATENT SPECIFICATION

(11) **EP 4 358 264 B1**
(45) Date of publication and mention of the grant of the patent: **10.06.2026**
(21) Application number: 23756660.9
(22) Date of filing: 16.02.2023
(51) Int. Cl.: H01M 50/367

(54) **BATTERY MODULE HAVING FLAME PROPAGATION BLOCKING STRUCTURE AND BATTERY PACK INCLUDING THE SAME**
BATTERIEMODUL MIT FLAMMENAUSBREITUNGSSPERRSTRUKTUR UND BATTERIEPACK DAMIT
MODULE DE BATTERIE AYANT UNE STRUCTURE DE BLOCAGE DE PROPAGATION DE FLAMME ET BLOC-BATTERIE L'INCLUTANT

(30) Priority: 18.02.2022 KR 20220021343
(43) Date of publication of application: 24.04.2024
(73) Proprietor: LG Energy Solution, Ltd., Seoul 07335 (KR)
(72) Inventor: LEE, Jung-Hoon, Daejeon 34122 (KR); SEONG, Jun-Yeob, Daejeon 34122 (KR); JUNG, Hye-Mi, Daejeon 34122 (KR)
(74) Representative: Plasseraud IP
(86) International application number: PCT/KR2023/002298
(87) International publication number: WO 2023/158248

(56) References cited:
- WO-A1-2021/079937
- KR-A- 20210 077 498
- KR-A- 20210 101 820
- KR-A- 20210 129 513
- KR-A- 20220 010 876
- KR-B1- 102 324 507
- US-A1- 2013 089 763
- US-A1- 2018 034 014
- US-A1- 2024 106 065

## Description

### TECHNICAL FIELD

The present invention relates to a battery module, and more specifically, to a battery module for preventing or maximally delaying the chain ignition of other adjacent battery modules by allowing gas generated during internal ignition of the battery module to be vented to the outside but preventing flames or high-temperature particles from leaking to the outside.

The present application claims priority to Korean Patent Application No. 10-2022-0021343 filed on February 18, 2022.

### BACKGROUND ART

A secondary battery is attracting attention as a new energy source to improve eco-friendliness and energy efficiency in that it has not only a primary advantage of dramatically reducing the use of fossil fuels, but also no by-products generated from the use of energy.

Accordingly, the application of a secondary battery to various devices is increasing. For example, it is not only widely used as an energy source for wireless mobile devices or wearable devices, which are multifunctional small products, but also used as an energy source for electric vehicles and hybrid vehicles, which are presented as alternatives to existing gasoline vehicles and diesel vehicles, or as an energy storage system (ESS).

A lithium secondary battery, which has been widely used in recent years, has an operating voltage of about 2.5 V to 4.5 V per battery. Therefore, in the case of an electric vehicle or power storage device requiring large capacity and high power, a battery module in which a plurality of lithium secondary batteries are connected in series and/or in parallel, and a battery pack in which the battery modules are connected in series and/or in parallel are configured and used as energy sources.

Depending on the power or capacity of the battery pack required for an electric vehicle, the number of lithium secondary batteries to be included in one battery module or the number of battery modules to be included in one battery pack may increase.

However, in the case of a battery pack including such a large number of lithium secondary batteries, the damage may be inevitably increased in the event of a fire or explosion.

For example, when an event such as a short circuit between lithium secondary batteries or an abnormal temperature rise occurs in some battery modules, a large amount of venting gas may be generated from the lithium secondary batteries, and when deterioration is intensified, flames and high-temperature particles including electrode active materials, aluminum particles and so on may be generated, and the flames and high-temperature particles may be ejected to the outside from the corresponding battery module together with the venting gas. The emitted flames and high-temperature sparks cause thermal damage to other battery modules adjacent to the ignited battery module, thereby promoting ignition of other battery modules.

Therefore, in the case of vehicle battery packs where securing fire safety is particularly important, in order to prevent or maximally delay the risk of chain ignition or explosion of battery modules, it is important to design a battery module so that flames and high-temperature sparks may not be easily discharged from the initially ignited battery module to the outside of the corresponding battery module.

In the prior art, document US 2013/0089763 describes a battery pack which includes at least one battery module including a plurality of battery cells aligned in a direction and having vents for discharging gas, and a top cover having a degassing cover covering the vents and a cover plate arranged above the degassing cover.

Documents WO2021/079937A1 and US2018/034014 A1 disclose battery modules with venting holes on battery cells.

### DISCLOSURE

### Technical Problem

The present invention is designed to solve the problems of the related art, and therefore the present invention is directed to providing a battery module for allowing gas generated during internal ignition of the battery module to be vented to the outside but preventing flames or high-temperature particles from easily leaking to the outside and a battery pack including the same.

However, technical problems to be solved by the present disclosure are not limited to the above-described problems, and other problems not mentioned herein may be clearly understood by those skilled in the art from the following description of the present disclosure.

### Technical Solution

According to the present invention , there is provided a battery module according to claim 1.

In realization modes:
The case cover may have an extension plate extending higher than the upper plate of the case body, and the gas venting panel may cover the entire upper plate of the case body and be coupled to the extension plate.

The gas inlet may be provided at the center of the duct along the longitudinal direction, and the gas outlet may be provided at the end of the duct along the longitudinal direction.

The duct may have a plurality of partitions partitioning the inner space.

The gas discharge passage may be provided between each of the plurality of partitions and extend from the gas inlet to the gas outlet.

The duct may be configured such that, when mounted on the upper plate of the case body, a gas flow space is formed between one surface of the duct and the upper plate of the case body.

The duct may be configured such that both edge regions according to the width direction are formed to be more extended in a thickness direction than other portions and thus, when mounted on the upper plate of the case body, one surface of the duct is spaced apart from the upper plate of the case body by a predetermined distance.

The gas inlet and the gas venting hole may be configured to be vertically mismatched and positioned farthest from each other in a horizontal direction.

The gas venting panel may cover the upper plate of the case body and both ends thereof in the longitudinal direction may be welded to the extension plate of the case cover.

The gas venting panel may further include a rupture membrane made of a material capable of being torn by a predetermined pressure and provided to cover the gas outlet.

At least one of the gas venting hole, the gas inlet, and the gas outlet may be covered with a mesh net.

The battery cells may be pouch-type battery cells and provided to be stacked in one direction.

The gas venting hole may be provided in the upper portion of a region where electrode leads of the pouch-type battery cells are located.

According to another aspect of the present disclosure, there may be provided a battery pack including one or more battery modules described above.

### Advantageous Effects

According to one aspect of the present invention, in the event of an internal ignition of the battery module, gas may be vented to the outside, and flames or high-temperature particles may be prevented from leaking to the outside.

Therefore, according to the battery module of the present invention, it is possible to prevent the spread of fire caused by the transfer of flames or high-temperature sparks to other battery modules or structures adjacent to the ignited battery module.

Effects to be obtained by the present disclosure are not limited to the above-described effects, and other effects not mentioned herein may be clearly understood by those skilled in the art from the following description of the present disclosure.

### DESCRIPTION OF DRAWINGS

FIG. 1 is a schematic perspective view of a battery module according to an embodiment of the present disclosure.
FIG. 2 is an exploded perspective view of main components of the battery module of FIG. 1.
FIG. 3 is a view in which a gas venting panel is separated from the battery module of FIG. 1.
FIG. 4 is a schematic perspective view of a gas venting panel according to an embodiment of the present disclosure.
FIG. 5 is an enlarged view of region K of FIG. 4.
FIG. 6 is a view of the gas venting panel of FIG. 4, as viewed from bottom to top.
FIG. 7 is a view for describing the structure of a module case and a gas venting panel according to an embodiment of the present disclosure.
FIG. 8 is a view illustrating a gas discharge flow in the event of an ignition of a battery module according to an embodiment of the present disclosure.
FIG. 9 is a schematic perspective view of a gas venting panel of a battery module according to another embodiment of the present disclosure.
FIG. 10 is a view in which a gas venting panel is separated from a battery module according to still another embodiment of the present disclosure.

### BEST MODE

Hereinafter, preferred embodiments of the present disclosure will be described in detail with reference to the accompanying drawings. Prior to the description, it should be understood that the terms used in the specification and the appended claims should not be construed as limited to general and dictionary meanings, but interpreted based on the meanings and concepts corresponding to technical aspects of the present disclosure on the basis of the principle that the inventor is allowed to define terms appropriately for the best explanation.

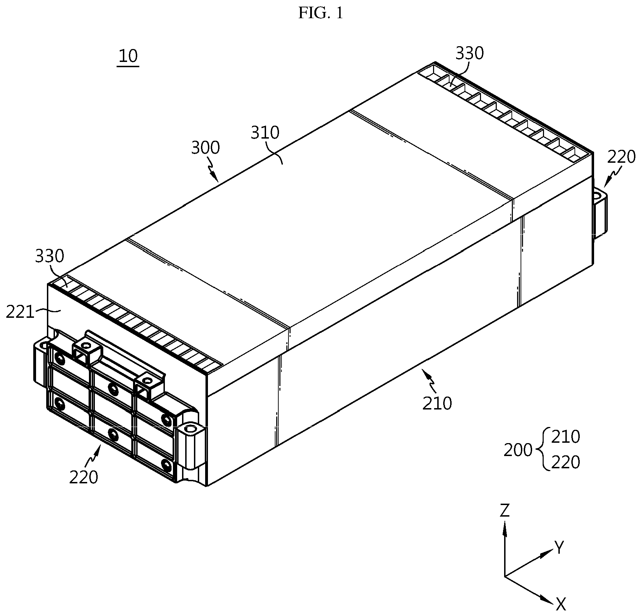

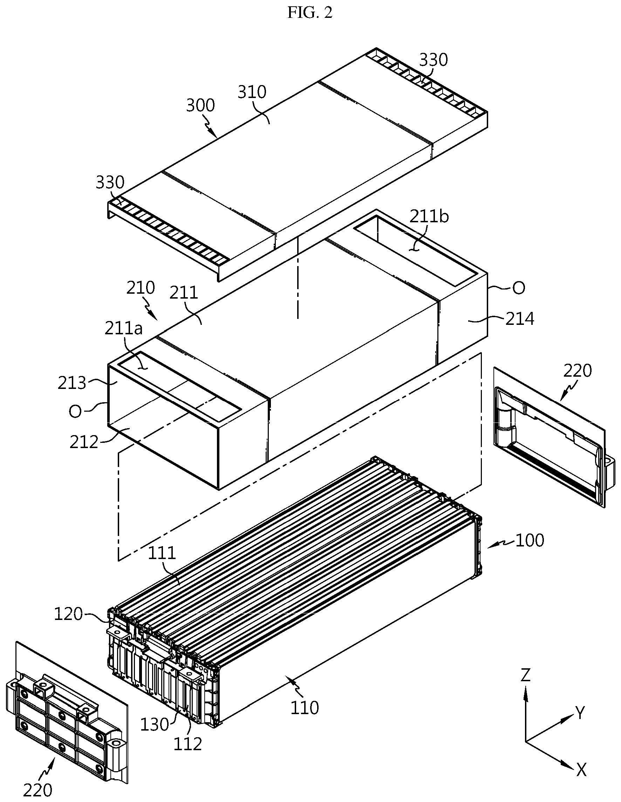

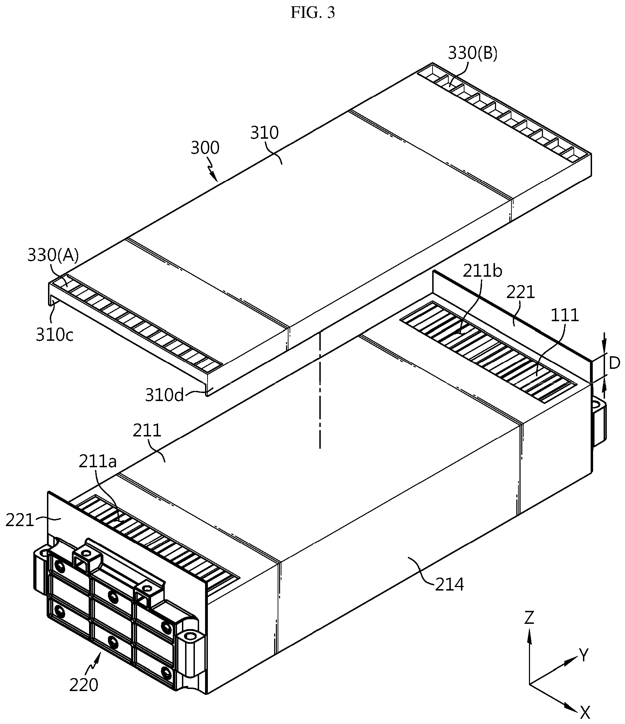

FIG. 1 is a schematic perspective view of a battery module according to an embodiment of the present disclosure, FIG. 2 is an exploded perspective view of main components of the battery module of FIG. 1, and FIG. 3 is a view in which a gas venting panel is separated from the battery module of FIG. 1.

Referring to FIGS. 1 to 3, a battery module 10 according to an embodiment of the present disclosure includes a cell assembly 100 formed by stacking battery cells 111, a module case 200 for accommodating the cell assembly 100, and a gas venting panel 300 for discharging gas in the event of ignition.

The battery module 10 according to an embodiment of the present disclosure includes a gas venting panel 300, so that gas may be smoothly discharged to the outside in the event of an internal ignition. When the battery module 10 is internally ignited, gas may be discharged to the outside, and thus the internal pressure of the battery module 10 may not rise rapidly, thereby preventing an explosion of the battery module 10 or a collapse of the module case 200.

In addition, as will be described in detail later, the gas venting panel 300 has a gas discharge passage 311 therein from which flames or high-temperature particles may not easily escape. Accordingly, when configuring a battery pack, other battery modules (not shown) or structures adjacent to the battery module 10 of the present disclosure may be less thermally affected by internal ignition of the battery module 10 of the present disclosure. (Here, the high-temperature particles refer to active materials deintercalated from electrodes inside the battery cell 111 or molten aluminum particles.)

Looking first at the cell assembly 100 among the main components of the battery module 10 according to the present disclosure, the cell assembly 100 includes a cell stack 110, a bus bar frame 120, and a plurality of bus bars 130.

The cell stack 110 is an assembly of battery cells 111 formed by stacking a plurality of battery cells 111. That is, as shown in FIG. 2, the cell stack 110 may be composed of a plurality of pouch-type battery cells 111 stacked in one direction (X direction) with their wide sides erected.

The pouch-type battery cell 111 includes an electrode assembly, a pouch case accommodating the electrode assembly, and a pair of electrode leads 112 connected to the electrode assembly and withdrawn to the outside of the pouch case to function as electrode terminals. The pair of electrode leads 112 are drawn out in opposite directions to each other in the longitudinal direction (±Y direction) of the battery cell 111.

If necessary, the pouch-type battery cell 111 may have a shape in which the electrode lead 112 is located only at one end in the Y-axis direction, for example, at the end in the +Y-axis direction. On the other hand, the present disclosure is not limited by the specific type or shape of the battery cell 111, and various battery cells 111 known at the time of filing of the present disclosure may be employed to constitute the cell stack 110 of the present disclosure.

The bus bar frame 120 may be injection molded from an electrically insulating material and is provided in the form of a plate body with a size capable of covering the front (+Y direction) or the rear (-Y direction) of the cell stack 110.

In addition, the bus bar frame 120 includes a plurality of lead slots through which the electrode leads 112 of the pouch-type battery cells 111 may be passed in the +Y-axis or -Y-axis direction. The plurality of lead slots may be provided along the stacking direction (X direction) of the battery cells 111.

The bus bar frame 120 of this embodiment is configured to fix a plurality of bus bars 130, and although not shown, may be configured to allow additional components such as connectors or other printed circuit boards (PCBs) to be installed in the space above the bus bars 130 and to have a support plate for supporting and fixing the additional components.

The plurality of bus bars 130 are made of an electrically conductive material, for example, a metal such as copper, aluminum, nickel, or the like, and the electrode leads 112 of a predetermined number of battery cells 111 are welded to the surface of the predetermined bus bar 130 to be fixed and electrically connected. The bus bars 130 of this embodiment are provided in a rectangular bar shape with a hole in the center for passage of the electrode lead 112, and are disposed on the bus bar frame 120 so that their perforated portions communicate with the lead slots of the bus bar frame 120.

In addition, the bus bars 130 are disposed on the bus bar frame 120 along the same direction as the stacking direction of the battery cells 111. Predetermined battery cells 111 are withdrawn in front of the bus bar 130 by passing through the bus bar frame 120 back and forth through the lead slots at the corresponding positions where the electrode leads 112 are overlapped, and the withdrawn portions may be bent and welded fixedly to the surface of the bus bar 130.

The module case 200, as a component for protecting the cell assembly 100 from external impacts and the like, may be preferably made of a material having excellent mechanical rigidity. The module case 200 according to this embodiment includes a case body 210 and a case cover 220, as shown in FIGS. 1 and 2.

The case body 210 may be formed in a rectangular tube shape that is hollow inside having an upper plate 211, a lower plate 212, both side plates 213, 214, and an open end O open at both ends in the longitudinal direction, and provided such that the cell assembly 100 may be inserted into the inside along the longitudinal direction. That is, the case body 210 may be configured to allow the cell assembly 100 to be inserted therein in a sliding or force-fitting manner.

The battery module 10 to which the case body 210 is applied may be configured such that there is little gap between the upper plate 211 of the case body 210 and the top of the cell stack 110, little gap between the lower plate 212 of the case body 210 and the bottom of the cell stack, and little gap between both side plates 213, 214 of the case body 210 and both sides of the cell stack 110.

In addition, the case body 210 includes gas venting holes 211a, 211b. For example, as shown in FIG. 2, the gas venting holes 211a, 211b may be provided in an edge region of the upper plate 211 of the case body 210 intersecting the open end of the case body 210. In the case of the pouch-type battery cell 111, gas is generated therein during thermal runaway, which causes swelling, and if this intensifies, the sealed side portion may be torn, whereby gas and high-temperature particles may be ejected. In particular, the electrode lead 112 portion, where a lot of heat is generated during charge/discharge, is highly likely to be ignited, and a lot of gas is generated at the corresponding portion. Therefore, it is preferable to provide the gas venting holes 211a, 211b in the upper portion of the region where the electrode leads 112 are located to facilitate gas discharge. Accordingly, in this embodiment, the gas venting holes 211a, 211b are provided on the upper plate 211 of the case body 210 close to the open end O of the case body 210.

The case cover 220 may be provided to shield a portion where the electrode leads 112 and the bus bars 130 are electrically connected, to cover the open end O of the case body 210, and to be coupled to the case body 210. The case cover 220 is made of, for example, an insulating material on the inside and a metal material on the outside, and thus may be provided to be welded to the open end O of the case body 210.

In addition, the case cover 220 of the battery module 10 according to an embodiment of the present disclosure has an extension plate 221 formed to extend higher than the upper plate 211 of the case body 210, as indicated by 'D' in FIG. 3. The extension plate 221 may be used as a part for welding or bolting the gas venting panel 300 to be described later and for sealing the gas flow space G.

The gas venting panel 300 is a component mounted on the outside of the module case 200 to discharge gas in the event of an internal ignition of the battery module 10, but to prevent flames or high-temperature particles from leaking to the outside.

The gas venting panel 300 may be provided in a plate shape having a gas discharge passage 311 therein for guiding gas flow along a predetermined path, and may be disposed on the outside of the module case 200, that is, on the upper plate 211 of the case body 210 to communicate with the gas venting holes 211a, 211b.

As shown in FIGS. 1 to 3, the gas venting panel 300 according to the present embodiment covers the entire upper plate of the case body 210 and may be welded or bolted to the extension plate 221 to be fixed. In particular, the gas venting panel 300 covers the upper plate of the case body 210, and both ends along the longitudinal direction are welded to the extension plate 221 of the case cover 220, thereby securing a sealed gas flow space G surrounded by the upper plate of the case body 210, the extension plate 221 of the case cover 220, and the gas venting panel 300.

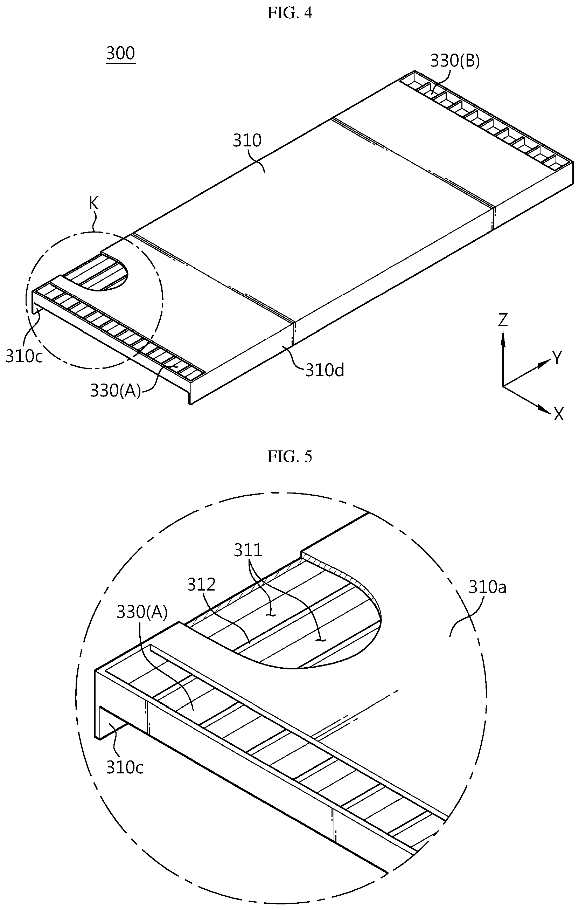

Looking more specifically at the gas venting panel 300 according to the present embodiment with reference to FIGS. 4 to 7, the gas venting panel 300 includes a duct 310, a gas inlet 320, and a gas outlet 330.

The duct 310 may have a gas discharge passage 311 extending along the longitudinal direction (±Y direction) therein and may be provided in the form of a hollow plate body having a size corresponding to the upper plate of the case body 210. That is, the duct 310 has a length and width corresponding to the length and width of the upper plate of the case body 210 and includes an empty space where gas may flow inside.

The space is partitioned by a plurality of partitions 312 spaced apart from each other in the width direction (±X direction) of the gas venting panel 300 and extending from one end to the other end of the duct 310 in the longitudinal direction (±Y direction). The space partitioned by the partitions in this way forms a plurality of long and narrow gas discharge passages 311. Therefore, a plurality of gas discharge passages 311 are provided between the plurality of partitions 312, and each gas discharge passage 311 extends from the gas inlet 320 to the gas outlet 330 in a partitioned and separated form.

According to the configuration of the duct 310 as described above, the high-temperature particles or flames moving together with the gas are easily bottlenecked or trapped in the process of moving through the plurality of long and narrow gas discharge passages 311, and thus their movement may be limited or dissipated. In addition, although omitted in the configuration of the present embodiment, a metal mesh net may be added to at least one of the gas discharge passage 311, the gas inlet 320, and the gas outlet 330 as a means of suppressing the movement of high-temperature particles or flames.

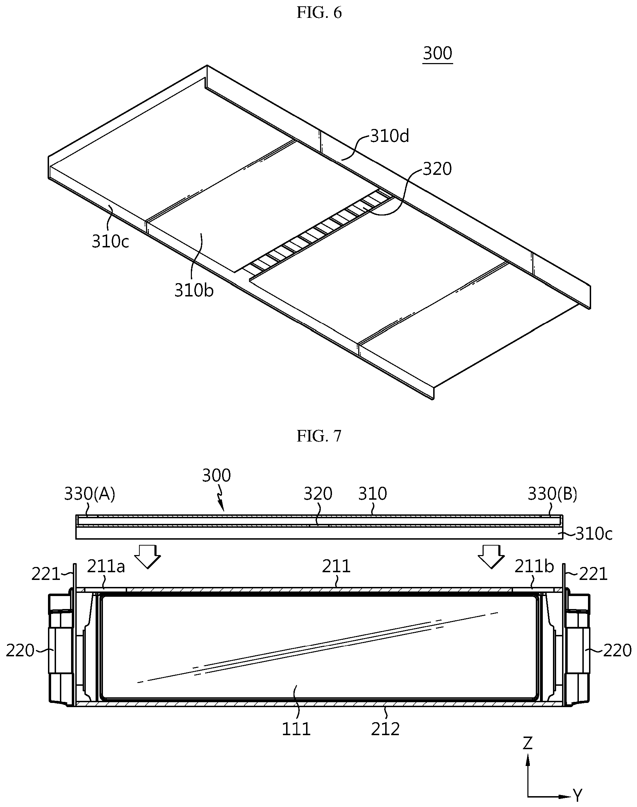

The gas inlet 320 is provided on one surface 310b of the duct 310 facing the case body 210, and the gas outlet 330 is provided on the other surface 310a of the duct 310 opposite to the one surface 310b of the duct 310. That is, the gas inlet 320 is provided on the lower surface 310b of the duct 310 as shown in FIG. 6, and the gas outlet 330 is provided on the upper surface of the duct 310 as shown in FIG. 4. Therefore, according to the gas venting panel 300 according to the present embodiment, gas may enter the center of the lower surface of the gas venting panel 300 and exit from both ends of the upper surface of the gas venting panel 300.

In particular, the gas inlet 320 may be configured to be vertically mismatched with the gas venting holes 211a, 211b and positioned farthest from each other in a horizontal direction. To this end, in the present embodiment, the gas inlet 320 is provided at the center of the lower surface 310b of the duct 310 along the longitudinal direction. In this way, the gas inlet 320 is located at the farthest position in the horizontal direction from the gas venting holes 211a, 211b provided at both edge regions of the upper plate 211 of the case body 210, thereby preventing high-temperature particles or flames from easily flowing into the gas inlet 320.

Also, the gas outlets 330(A), 330(B) are composed of two, and are provided at both ends of the upper surface of the duct 310 along the longitudinal direction. Similarly to the above, the gas outlets 330(A), 330(B) are located at the farthest position in the horizontal direction from the gas inlet 320, so that the length of the gas discharge passage 311 is maximally extended until the gas is discharged to the outside and thus, even if the high-temperature particles or flames flow into the duct 310 through the gas inlet 320, it is possible to prevent them from easily reaching the gas outlets 330(A), 330(B).

In addition, the duct 310 according to an embodiment of the present disclosure is provided so that a predetermined gap or gas flow space G may be formed between one surface 310b of the duct 310 and the upper plate 211 of the case body 210 when mounted on the upper plate of the case body 210.

That is, as shown in FIGS. 1, 6, and 8, the duct 310 is configured such that both edge regions 310c, 310d along the width direction are formed to extend in the thickness direction more than other portions and thus, when mounted on the upper plate of the case body 210, one surface of the duct 310 is spaced apart from the upper plate of the case body 210 by a predetermined distance.

When the gas venting panel 300 is mounted on the module case 200, both edge regions 310c, 310d along the width direction of the duct 310 may be welded along the long side edge lines of the upper plate 211 of the case body 210 and both ends of the duct 310 in the longitudinal direction may be welded along the edge line of the extension plate 221 of the case cover 220. Then, a predetermined gap or gas flow space G through which gas may flow may be provided between the upper plate 211 of the case body 210 and the lower surface 310b of the duct 310, and the front, rear, left, and right directions of the gas flow space G may be shielded by the extension plate 221 of the case cover 220 and both edge regions 310c, 310d of the duct 310.

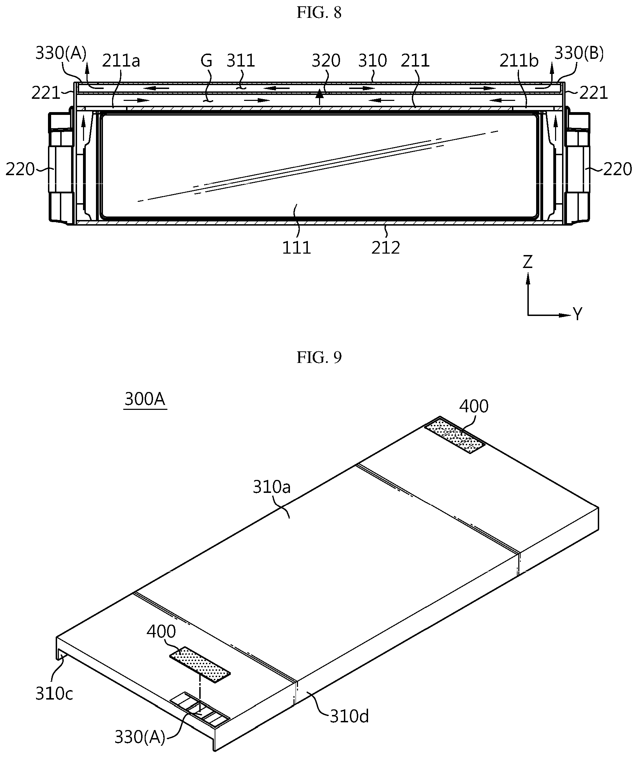

FIG. 8 is a view illustrating a gas discharge flow in the event of an ignition of a battery module according to an embodiment of the present disclosure.

As described above, according to the configuration in which the gas venting panel 300 is coupled to the upper plate 211 and the extension plate 221 of the module case 200, in a situation where gas and flame are generated inside the battery module 10, the gas may move along the gas flow space G and the gas venting panel 300 and escape to the outside of the battery module 10 through the two gas outlets 330(A), 330(B), as indicated by the arrows in FIG. 8,

However, as shown in FIG. 8, flames or high-temperature particles are difficult to be discharged to the outside due to the long and complicated path to the gas outlets 330(A), 330(B) since the gas flow space G and the gas discharge passage 311 have a double-layer structure.

In other words, the vertically upper portions of the gas venting holes 211a, 211b are blocked by the gas venting panel 300 and thus, even if flames or high-temperature particles are ejected from the gas venting holes 211a, 211b in the vertically upward direction, their movement may be restricted, such as primarily hitting the gas venting panel 300 and falling back down. In addition, since the gas inlet 320 is located at the center of the lower surface 310b of the duct 310, flames and particles may not easily flow into the gas inlet 320. Furthermore, if the size of the gas inlet 320 is formed as small as possible or the width of the gas inlet 320 is greatly reduced in the width direction unlike this embodiment, it may be more difficult for flames or high-temperature particles to flow into the gas inlet 320. Although not shown, for example, by applying a mesh net with fine holes to the gas inlet 320 of FIG. 6, it is also possible to make it more difficult for flames and high-temperature particles to enter the gas venting panel 300.

Even if it is assumed that flames or high-temperature particles are introduced into the gas venting panel through the gas inlet 320 via the gas flow space G in this way, the flames are trapped and extinguished inside the gas venting panel 300, and the high-temperature particles repeatedly collide with the wall surface of the long and narrowly formed gas discharge passage 311 to lose heat, thereby reducing the temperature in the process of moving and greatly decreasing the amount finally discharged to the outside through the gas outlet.

As described above, according to the configuration or application structure of the battery module 10 according to an embodiment of the present disclosure, when the battery module 10 is internally ignited, the outflow of flames or high-temperature particles to the outside may be prevented and gas may be discharged to the outside. Accordingly, it is possible to prevent a fire from spreading due to flames or high-temperature sparks being transferred to other battery modules 10 or structures adjacent to the ignited battery module 10.

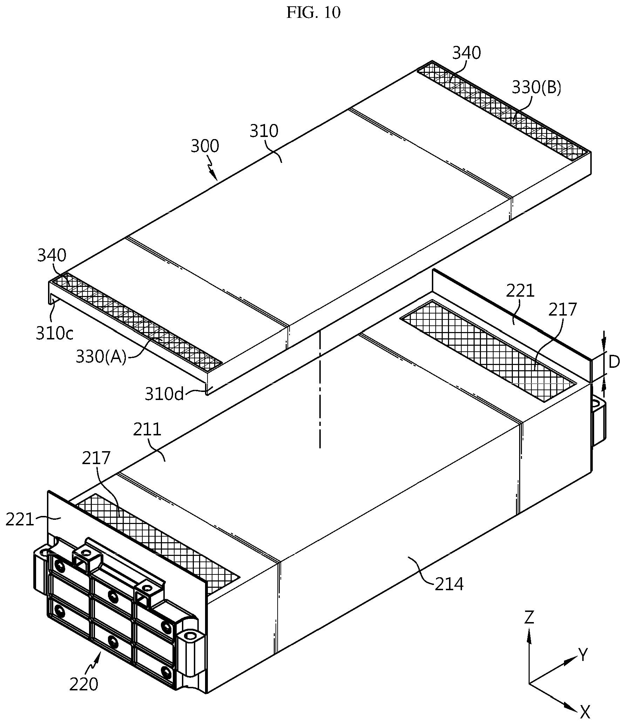

Next, other embodiments of the present disclosure will be briefly described with reference to FIGS. 9 and 10.

FIG. 9 is a schematic perspective view of a gas venting panel of a battery module according to another embodiment of the present disclosure, and FIG. 10 is a view in which a gas venting panel is separated from a battery module according to still another embodiment of the present disclosure.

The same reference numbers as in the previous drawings represent the same members, and redundant descriptions of the same members will be omitted, but differences from the above-described embodiment will be mainly described.

A battery module according to another embodiment of the present disclosure includes a gas venting panel 300A as shown in FIG. 9. That is, the battery module according to another embodiment of the present disclosure has a difference in the gas venting panel 300A when compared with the above-described embodiment.

Specifically, the gas venting panel 300A according to the embodiment of FIG. 9 may be characterized by the application of a rupture membrane 400 to the gas outlets 330(A), 330(B). The rupture membrane 400 is made of a material that may be torn open by gas pressure, and may be provided to cover the gas outlets 330(A), 330(B) and be detachable. For example, the rupture membrane 400 may be provided in the form of about 1 mm thin plate made of aluminum or plastic material.

According to the above configuration, it is possible to prevent moisture or foreign substance from penetrating into the battery module 10 at normal times, and in the event of a fire inside the battery module 10, the rupture membrane 400 may be opened to discharge gas to the outside of the battery module 10.

On the other hand, the battery module 10 according to still another embodiment of the present disclosure has a difference in that at least one of the gas venting holes 211a, 211b, the gas inlet 320, and the gas outlet 330 is covered with the mesh nets 217, 340 when compared with the battery module 10 according to the embodiment of FIG. 1.

For example, as shown in FIG. 10, the gas venting holes 211a, 211b may be covered with a first mesh net 217, and the gas outlets 330(A), 330(B) may be covered with a second mesh net 340. The first mesh net 217 and the second mesh net 340 may be formed of a metal that is not easily melted by heat.

In this way, by applying the first mesh net 217 and the second mesh net 340 to the gas venting holes 211a, 211b and the gas outlets 330(A), 330(B), respectively, it is possible to prevent flames or high-temperature particles together with gas from passing through the gas venting holes 211a, 211b or the gas outlets 330(A), 330(B) more easily than in the above-described embodiments.

Meanwhile, a battery pack (not shown) according to the present disclosure may include one or more battery modules described above. The battery pack according to the present disclosure may further include a master battery management system (BMS) for integrally controlling charge/discharge of at least one battery module, a current sensor, a fuse, and a pack case for accommodating the above-described components.

The battery pack according to the present disclosure may be applied to an energy storage device or to a vehicle such as an electric scooter, an electric vehicle or a hybrid vehicle.

While the present disclosure has been hereinabove described with regard to a limited number of embodiments and drawings, the present disclosure is not limited thereto and it is obvious to those skilled in the art that a variety of modifications and changes may be made thereto within the technical aspects of the scope of the appended claims.

Meanwhile, the terms indicating directions as used herein such as upper, lower, left, right, front, and rear are used for convenience of description only, and it is obvious to those skilled in the art that the term may change depending on the position of the stated element or an observer.

## Claims

1. A battery module (10) comprising:
a plurality of battery cells (111);
a module case (200) accommodating the plurality of battery cells therein and having a gas venting hole (211a, 211b) on at least one side thereof; wherein it comprises:
a gas venting panel (300) provided in a plate shape having a gas discharge passage (311) therein for guiding gas flow along a predetermined path and coupled to the outside of the module case so that the gas discharge passage (311) communicates with the gas venting hole (211a, 211b) of said module case,
wherein the module case (200) comprises:
a case body in a rectangular tubular shape having (210) an upper plate (211), a lower plate (212), both side plates (213, 214)in a lateral direction and an open end (O) formed by opening at least one end along a longitudinal direction and accommodating the plurality of battery cells (111) therein; and
a case cover (220) covering the open end of the case body (210) and coupled to the case body,
**characterized in that** the gas venting hole (211a, 211b) is provided in an edge region of the upper plate (211) of the case body intersecting the open end (O) of the case body, the gas venting panel (300) comprising:
a duct (310) having the gas discharge passage (311) extending along the longitudinal direction therein and formed in a plate shape having a size corresponding to the upper plate (211) of the case body (210);
a gas inlet (320) provided on one surface of the duct facing the case body; and
a gas outlet (330) provided on the other surface of the duct opposite to the one surface of the duct.

2. The battery module according to claim 1,
wherein the case cover (220) has an extension plate (221) extending higher than the upper plate (211) of the case body (210), and
the gas venting panel (300) covers the entire upper plate (211) of the case body and is coupled to the extension plate (221).

3. The battery module according to claim 1,
wherein the gas inlet (320) is provided at the center of the duct (310) along the longitudinal direction, and the gas outlet (330) is provided at the end of the duct along the longitudinal direction.

4. The battery module according to claim 1,
wherein the duct (310) has a plurality of partitions (312) partitioning the inner space.

5. The battery module according to claim 4,
wherein the gas discharge passage (311) is provided between each of the plurality of partitions (312) and extends from the gas inlet (320) to the gas outlet (330).

6. The battery module according to claim 1,
wherein the duct (310) is configured such that, when mounted on the upper plate (211) of the case body (210), a gas flow space is formed between one surface of the duct (310) and the upper plate (211) of the case body (210).

7. The battery module according to claim 1,
wherein the duct (310) is configured such that both edge regions according to the width direction are formed to be more extended in a thickness direction than other portions and thus, when mounted on the upper plate (211) of the case body (210), one surface of the duct (310) is spaced apart from the upper plate (211) of the case body (210) by a predetermined distance.

8. The battery module according to claim 1,
wherein the gas inlet (320) and the gas venting hole (211a, 211b) are configured to be vertically mismatched and positioned farthest from each other in a horizontal direction.

9. The battery module according to claim 2,
wherein the gas venting panel (300) covers the upper plate (211) of the case body (210) and both ends thereof in the longitudinal direction are welded to the extension plate (221) of the case cover (220).

10. The battery module according to claim 1,
wherein the gas venting panel (300) further comprises a rupture membrane (400) made of a material capable of being torn by a predetermined pressure and provided to cover the gas outlet (330).

11. The battery module according to claim 1,
wherein at least one of the gas venting hole (211a, 211b), the gas inlet (320), and the gas outlet (330) is covered with a mesh net.

12. The battery module according to claim 1,
wherein the battery cells (111) are pouch-type battery cells and are stacked in one direction.

13. The battery module according to claim 12,
wherein the gas venting hole (211a, 211b) is provided in the upper portion of a region where electrode leads of the pouch-type battery cells are located.

## Patentansprüche

1. Ein Batteriemodul (10), umfassend:
eine Vielzahl von Batteriezellen (111);
ein Modulgehäuse (200), das die Vielzahl von Batteriezellen darin aufnimmt und ein Gasentlüftungsloch (211a, 211b) an mindestens einer Seite davon aufweist;
wobei es umfasst:
ein Gasentlüftungspaneel (300), das in einer Plattenform vorgesehen ist, die einen Gasaustrittskanal (311) darin aufweist, um den Gasstrom entlang eines vorbestimmten Pfades zu leiten, und mit der Außenseite des Modulgehäuses gekoppelt ist, so dass der Gasaustrittskanal (311) mit dem Gasentlüftungsloch (211a, 211b) des besagten Modulgehäuses in Verbindung steht,
wobei das Modulgehäuse (200) umfasst:
einen Gehäusekörper (210) in einer rechteckigen Rohrform mit einer oberen Platte (211), einer unteren Platte (212), beiden Seitenplatten (213, 214) in einer seitlichen Richtung und einem offenen Ende (O), das durch Öffnen mindestens eines Endes entlang einer Längsrichtung gebildet wird und die Vielzahl von Batteriezellen (111) darin aufnimmt; und
einen Gehäusedeckel (220), der das offene Ende des Gehäusekörpers (210) bedeckt und mit dem Gehäusekörper gekoppelt ist,
**dadurch gekennzeichnet, dass** das Gasentlüftungsloch (211a, 211b) in einem Randbereich der oberen Platte (211) des Gehäusekörpers vorgesehen ist, der das offene Ende (O) des Gehäusekörpers schneidet, wobei das Gasentlüftungspaneel (300) umfasst:
einen Kanal (310), der den sich entlang der Längsrichtung erstreckenden Gasaustrittskanal (311) darin aufweist und in einer Plattenform mit einer Größe ausgebildet ist, die der oberen Platte (211) des Gehäusekörpers (210) entspricht;
einen Gaseinlass (320), der auf einer Oberfläche des Kanals vorgesehen ist, die dem Gehäusekörper zugewandt ist; und einen Gasauslass (330), der auf der anderen Oberfläche des Kanals gegenüber der einen Oberfläche des Kanals vorgesehen ist.

2. Das Batteriemodul nach Anspruch 1,
wobei der Gehäusedeckel (220) eine Erweiterungsplatte (221) aufweist, die sich höher als die obere Platte (211) des Gehäusekörpers (210) erstreckt, und
das Gasentlüftungspaneel (300) die gesamte obere Platte (211) des Gehäusekörpers bedeckt und mit der Erweiterungsplatte (221) gekoppelt ist.

3. Das Batteriemodul nach Anspruch 1,
wobei der Gaseinlass (320) in der Mitte des Kanals (310) entlang der Längsrichtung vorgesehen ist, und der Gasauslass (330) am Ende des Kanals entlang der Längsrichtung vorgesehen ist.

4. Das Batteriemodul nach Anspruch 1,
wobei der Kanal (310) eine Vielzahl von Trennwänden (312) aufweist, die den Innenraum unterteilen.

5. Das Batteriemodul nach Anspruch 4,
wobei der Gasaustrittskanal (311) zwischen jeder der Vielzahl von Trennwänden (312) vorgesehen ist und sich vom Gaseinlass (320) zum Gasauslass (330) erstreckt.

6. Das Batteriemodul nach Anspruch 1,
wobei der Kanal (310) so konfiguriert ist, dass, wenn er auf der oberen Platte (211) des Gehäusekörpers (210) montiert ist, ein Gasströmungsraum zwischen einer Oberfläche des Kanals (310) und der oberen Platte (211) des Gehäusekörpers (210) gebildet wird.

7. Das Batteriemodul nach Anspruch 1,
wobei der Kanal (310) so konfiguriert ist, dass beide Randbereiche gemäß der Breitenrichtung so ausgebildet sind, dass sie in einer Dickenrichtung weiter ausgedehnt sind als andere Abschnitte, und somit, wenn er auf der oberen Platte (211) des Gehäusekörpers (210) montiert ist, eine Oberfläche des Kanals (310) von der oberen Platte (211) des Gehäusekörpers (210) um einen vorbestimmten Abstand beabstandet ist.

8. Das Batteriemodul nach Anspruch 1,
wobei der Gaseinlass (320) und das Gasentlüftungsloch (211a, 211b) so konfiguriert sind, dass sie vertikal versetzt und in horizontaler Richtung am weitesten voneinander positioniert sind.

9. Das Batteriemodul nach Anspruch 2,
wobei das Gasentlüftungspaneel (300) die obere Platte (211) des Gehäusekörpers (210) bedeckt und beide Enden davon in Längsrichtung an die Erweiterungsplatte (221) des Gehäusedeckels (220) geschweißt sind.

10. Das Batteriemodul nach Anspruch 1,
wobei das Gasentlüftungspaneel (300) ferner eine Berstmembran (400) umfasst, die aus einem Material hergestellt ist, das durch einen vorbestimmten Druck zerrissen werden kann, und vorgesehen ist, um den Gasauslass (330) abzudecken.

11. Das Batteriemodul nach Anspruch 1,
wobei mindestens eines von dem Gasentlüftungsloch (211a, 211b), dem Gaseinlass (320) und dem Gasauslass (330) mit einem Maschennetz bedeckt ist.

12. Das Batteriemodul nach Anspruch 1, wobei die Batteriezellen (111) Pouch-Typ-Batteriezellen sind und in einer Richtung gestapelt sind.

13. Das Batteriemodul nach Anspruch 12,
wobei das Gasentlüftungsloch (211a, 211b) im oberen Abschnitt eines Bereichs vorgesehen ist, in dem sich Elektrodenleitungen der Pouch-Typ-Batteriezellen befinden.

## Revendications

1. Un module de batterie (10) comprenant :
une pluralité de cellules de batterie (111) ;
un boîtier de module (200) logeant la pluralité de cellules de batterie à l'intérieur et ayant un trou d'évacuation de gaz (211a, 211b) sur au moins un de ses côtés ;
dans lequel il comprend :
un panneau d'évacuation de gaz (300) prévu sous forme de plaque ayant un passage d'évacuation de gaz (311) à l'intérieur pour guider l'écoulement de gaz le long d'un trajet prédéterminé et couplé à l'extérieur du boîtier de module de sorte que le passage d'évacuation de gaz (311) communique avec le trou d'évacuation de gaz (211a, 211b) dudit boîtier de module,
dans lequel le boîtier de module (200) comprend :
un corps de boîtier (210) de forme tubulaire rectangulaire ayant une plaque supérieure (211), une plaque inférieure (212), les deux plaques latérales (213, 214) dans une direction latérale et une extrémité ouverte (O) formée en ouvrant au moins une extrémité le long d'une direction longitudinale et logeant la pluralité de cellules de batterie (111) à l'intérieur ; et
un couvercle de boîtier (220) recouvrant l'extrémité ouverte du corps de boîtier (210) et couplé au corps de boîtier,
**caractérisé en ce que** le trou d'évacuation de gaz (211a, 211b) est prévu dans une région de bord de la plaque supérieure (211) du corps de boîtier croisant l'extrémité ouverte (O) du corps de boîtier, le panneau d'évacuation de gaz (300) comprenant :
un conduit (310) ayant le passage d'évacuation de gaz (311) s'étendant le long de la direction longitudinale à l'intérieur et formé en une forme de plaque ayant une taille correspondant à la plaque supérieure (211) du corps de boîtier (210) ;
une entrée de gaz (320) prévue sur une surface du conduit faisant face au corps de boîtier ; et
une sortie de gaz (330) prévue sur l'autre surface du conduit opposée à l'une surface du conduit.

2. Le module de batterie selon la revendication 1,
dans lequel le couvercle de boîtier (220) a une plaque d'extension (221) s'étendant plus haut que la plaque supérieure (211) du corps de boîtier (210), et
le panneau d'évacuation de gaz (300) recouvre toute la plaque supérieure (211) du corps de boîtier et est couplé à la plaque d'extension (221).

3. Le module de batterie selon la revendication 1,
dans lequel l'entrée de gaz (320) est prévue au centre du conduit (310) le long de la direction longitudinale, et la sortie de gaz (330) est prévue à l'extrémité du conduit le long de la direction longitudinale.

4. Le module de batterie selon la revendication 1,
dans lequel le conduit (310) a une pluralité de cloisons (312) partitionnant l'espace intérieur.

5. Le module de batterie selon la revendication 4,
dans lequel le passage d'évacuation de gaz (311) est prévu entre chacune de la pluralité de cloisons (312) et s'étend de l'entrée de gaz (320) à la sortie de gaz (330).

6. Le module de batterie selon la revendication 1,
dans lequel le conduit (310) est configuré de telle sorte que, lorsqu'il est monté sur la plaque supérieure (211) du corps de boîtier (210), un espace d'écoulement de gaz est formé entre une surface du conduit (310) et la plaque supérieure (211) du corps de boîtier (210).

7. Le module de batterie selon la revendication 1,
dans lequel le conduit (310) est configuré de telle sorte que les deux régions de bord selon la direction de la largeur sont formées pour être plus étendues dans une direction d'épaisseur que d'autres portions et ainsi, lorsqu'il est monté sur la plaque supérieure (211) du corps de boîtier (210), une surface du conduit (310) est espacée de la plaque supérieure (211) du corps de boîtier (210) d'une distance prédéterminée.

8. Le module de batterie selon la revendication 1,
dans lequel l'entrée de gaz (320) et le trou d'évacuation de gaz (211a, 211b) sont configurés pour être décalés verticalement et positionnés le plus loin possible l'un de l'autre dans une direction horizontale.

9. Le module de batterie selon la revendication 2,
dans lequel le panneau d'évacuation de gaz (300) recouvre la plaque supérieure (211) du corps de boîtier (210) et ses deux extrémités dans la direction longitudinale sont soudées à la plaque d'extension (221) du couvercle de boîtier (220).

10. Le module de batterie selon la revendication 1,
dans lequel le panneau d'évacuation de gaz (300) comprend en outre une membrane de rupture (400) faite d'un matériau capable d'être déchiré par une pression prédéterminée et prévue pour couvrir la sortie de gaz (330).

11. Le module de batterie selon la revendication 1,
dans lequel au moins un parmi le trou d'évacuation de gaz (211a, 211b), l'entrée de gaz (320) et la sortie de gaz (330) est recouvert d'un filet à mailles.

12. Le module de batterie selon la revendication 1,
dans lequel les cellules de batterie (111) sont des cellules de batterie de type poche et sont empilées dans une direction.

13. Le module de batterie selon la revendication 12,
dans lequel le trou d'évacuation de gaz (211a, 211b) est prévu dans la partie supérieure d'une région où sont situées les sorties d'électrode des cellules de batterie de type poche.
